# EUROPÄISCHE PATENTSCHRIFT

(11) **EP 1 886 764 B1**
(45) Veröffentlichungstag und Bekanntmachung des Hinweises auf die Patenterteilung: **15.09.2010**
(21) Anmeldenummer: 07014264.1
(22) Anmeldetag: 20.07.2007
(51) Int. Cl.: B23Q 3/157

(54) **Werkzeugmaschine**
Machine tool
Machine-outil

(30) Priorität: 09.08.2006 DE 102006037434
(43) Veröffentlichungstag der Anmeldung: 13.02.2008
(73) Patentinhaber: Haas Schleifmaschinen GmbH, 78647 Trossingen (DE)
(72) Erfinder: Bader, Thomas, 78559 Gosheim (DE); Braun, Hans-Dieter, 78665 Frittlingen (DE)
(74) Vertreter: Patentanwälte Westphal, Mussgnug & Partner

(56) Entgegenhaltungen:
- EP-A- 0 480 416
- EP-A- 1 260 306
- DE-A1- 3 713 515
- DE-U1- 20 307 998
- US-A- 5 364 329

## Beschreibung

Die Erfindung betrifft eine Werkzeugmaschine gemäß dem Oberbegriff des Patentanspruchs 1 (siehe z.B. DE-A-20307998).

Bei Werkzeugmaschinen zur spanenden Bearbeitung von Werkstücken, z.B. zum Schleifen, Fräsen, Bohren, Reiben, Drehen, Polieren und Gewindeschneiden werden häufig Werkzeugspeicher verwendet, die mehrere Werkzeuge aufnehmen können. Insbesondere wenn ein Werkstück in aufeinanderfolgenden Bearbeitungsschritten mit unterschiedlichen Werkzeugen bearbeitet wird, ist es wichtig, dass die in dem Magazin zur Verfügung gehaltenen Werkzeuge schnell in die Werkzeugspindel eingewechselt werden können. Es sind unterschiedliche Systeme bekannt, um Werkzeuge zwischen dem Werkzeugspeicher und der Werkzeugspindel der Werkzeugmaschine zu wechseln.

Bei dem sogenannten Pick-up-System werden die Werkzeugspindel und der Werkzeugspeicher gegeneinander verfahren und so zueinander positioniert, dass die Werkzeugspindel das jeweilige Werkzeug unmittelbar aus dem Speicher entnehmen bzw. ein vorangehend eingesetztes Werkzeug in dem Werkzeugspeicher ablegen kann. Es kann dabei die Werkzeugspindel gegenüber dem Werkzeugspeicher oder der Werkzeugspeicher gegenüber der Werkzeugspindel verfahren werden, um die Werkzeugspindel und den entsprechenden Werkzeughalter des Werkzeugspeichers in die gegenseitige Wechselposition zu bringen.

Aus der DE 198 44 242 C2 ist eine Schleifmaschine bekannt, bei welcher der Werkzeugspeicher linear in Bezug auf die Werkzeugspindel verfahrbar ist, um jeweils einen ausgewählten Werkzeughalter in die Wechselposition zu bringen. Die Werkzeughalter sind linear in der Verschiebungsachse nebeneinander angeordnet, wobei die Werkzeuge in diesen Werkzeughaltern so aufgenommen sind, dass ihre Achse in der Bewegungsebene liegt. Die Werkzeugspindel kann mit ihrer Werkzeugaufnahme axial fluchtend mit der Werkzeugachse bewegt werden, um das Werkzeug in den Werkzeughalter abzugeben oder aus dem Werkzeughalter zu entnehmen. Jeder Werkzeughalter des Werkzeugspeichers nimmt dabei ein Schleifwerkzeug und eine diesem Schleifwerkzeug zugeordnete Kühlmittelzufuhreinrichtung auf. Die Schleifwerkzeuge können jeweils nur zusammen mit der zugehörigen Kühlmittelzufuhreinrichtung gewechselt werden.

Aus der DE 23 00 708 A1 ist eine Werkzeugmaschine bekannt, bei welcher ein Werkzeugspeicher als in einer Ebene umlaufende Kette ausgebildet ist. Die Werkzeuge werden in den Werkzeughaltern dieses Werkzeugspeichers mit radialer in der Umlaufebene liegende Achse aufgenommen. Die Spannschäfte der Werkzeuge sind dabei radial nach innen gerichtet. Das Wechseln der Werkzeuge erfolgt durch einen schwenkbaren Werkzeuggreifer, der die Werkzeuge an der Außenseite des Werkzeugspeichers erfasst und in die Werkzeugspindel wechselt.

Der Erfindung liegt die Aufgabe zugrunde, eine Werkzeugmaschine der eingangs genannten Gattung mit einem Werkzeugspeicher auszubilden, der einen einfachen Werkzeugwechsel und eine hohe Flexibilität ermöglicht.

Diese Aufgabe wird erfindungsgemäß gelöst durch eine Werkzeugmaschine mit den Merkmalen des Patentanspruchs 1.

Vorteilhafte Ausführungen der Erfindung sind in den Unteransprüchen angegeben.

Erfindungsgemäß weist der Werkzeugspeicher zwei Werkzeugmagazine auf, die unabhängig voneinander gesteuert bewegbar sind. Die zwei Werkzeugmagazine sind so ausgebildet, dass sie die Werkzeuge jeweils mit in der Bewegungsebene liegender Achse aufnehmen, wobei die Achsen der Werkzeuge in den zwei Werkzeugmagazinen axial gleich ausgerichtet sind. Die Werkzeughalter der zwei Werkzeugmagazine sind dabei in der Achsrichtung der Werkzeuge so von einander beabstandet, dass die mit den Werkzeugen bestückten Werkzeugmagazine unbehindert gegeneinander bewegt werden können. Die Werkzeugspindel kann durch axiale Bewegung Werkzeuge aus jedem der beiden Werkzeugmagazine unmittelbar entnehmen bzw. in diese Werkzeugmagazine ablegen.

Daraus ergibt sich eine hohe Flexibilität im Einsatz des Werkzeugspeichers. Es können beide Werkzeugmagazine mit gleichen oder unterschiedlichen Werkzeugen bestückt werden. Dadurch ergibt sich eine wesentliche Vergrößerung der Werkzeugaufnahmekapazität des gesamten Werkzeugspeichers, ohne dass dessen Abmessungen wesentlich vergrößert werden müssen. Die Werkzeuge können alternativ aus dem einen oder dem anderen Werkzeugmagazin gewechselt werden. In einer anderen Verwendung können Werkzeuge und diesen zugeordnete Zusatzvorrichtungen gespeichert werden. In einer bevorzugten Ausführung, in welcher die Werkzeugmaschine als Schleifmaschine ausgebildet ist, können beispielsweise Schleifwerkzeuge und zugehörige Schleifscheibenschutze und/oder Kühlmittelzuführungen gespeichert werden. Insbesondere ist es dabei möglich, in dem einen Werkzeugmagazin die Bearbeitungswerkzeuge, z.B. die Schleifscheiben zu speichern und in dem anderen Werkzeugmagazin die Zusatzvorrichtungen, z.B. die Schleifscheibenschutze. Die getrennte Steuerbarkeit der beiden Werkzeugmagazine ermöglicht es dabei, die Schleifwerkzeuge mit den Zusatzvorrichtungen in beliebig wählbare Zuordnung zu kombinieren. Es können z.B. mehrere gleichartige Schleifwerkzeuge gespeichert werden und eine geringere Anzahl von zugeordneten Schleifscheibenschutzen, da die Schleifwerkzeuge einem größeren Verschleiß unterworfen sind. Es kann ein verschlissenes Schleifwerkzeug ausgewechselt werden, ohne dass der zugehörige Schleifscheibenschutz gewechselt werden muss. Es ist auch möglich, ein Schleifwerkzeug in dem einem Werkzeugmagazin und einen zugehörigen Schleifscheibenschutz in dem anderen Werkzeugmagazin gleichzeitig in der Wechselposition auszurichten, so dass das Schleifwerkzeug und der zugehörige Schleifscheibenschutz unmittelbar aufeinander folgend in einem Wechselvorgang ausgewechselt werden können.

Vorzugsweise sind die Werkzeugmagazine als umlaufende Werkzeugmagazine ausgebildet, um eine große Kapazität bei einem geringen Flächenbedarf zu erreichen. Eine konstruktiv einfache Lösung ergibt sich dadurch, dass die zwei Werkzeugmagazine als konzentrisch gelagerte und gegeneinander verdrehbare Magazinräder ausgebildet sind.

Die Magazinräder können dabei einen segmentförmigen Ausschnitt aufweisen. Dieser segmentartige Ausschnitt wird in der Ruhestellung des Werkzeugmagazins mit dem Arbeitsraum der Werkzeugmaschine zur Deckung gebracht, wodurch das Werkzeugmagazin mit seiner Drehachse näher an den Arbeitsraum verlagert werden kann und die Flächenbeanspruchung der Werkzeugmaschine reduziert wird.

Vorzugsweise ist der Werkzeugspeicher modular aus den zwei Werkzeugmagazinen aufgebaut. Dadurch wird die Flexibilität weiter vergrößert.

Im Folgenden wird die Erfindung anhand eines in der Zeichnung dargestellten Ausführungsbeispieles näher erläutert. Es zeigen
- Fig. 1: eine Werkzeugmaschine in perspektivischer Ansicht in der Arbeitsstellung,
- Fig. 2: dieselbe Ansicht der Werkzeugmaschine ohne Werkzeugspindel in der Arbeitsstellung,
- Fig. 3: dieselbe Darstellung der Werkzeugmaschine ohne Werkzeugspindel in der Wechselposition eines äußeren Magazinrades,
- Fig. 4: dieselbe Darstellung der Werkzeugmaschine in der Wechselposition des äußeren Magazinrades und der Werkzeugspindel,
- Fig. 5: dieselbe Darstellung der Werkzeugmaschine mit der Werkzeugspindel und einem inneren Magazinrad in der Wechselposition,
- Fig. 6: dieselbe Darstellung der Werkzeugmaschine mit der Werkzeugspindel, einem Schleifwerkzeug des äußeren Magazinrades und einem Schleifscheibenschutz des inneren Magazinrades in der Wechselposition,
- Fig. 7: in perspektivischer Detaildarstellung die Werkzeugspindel und das äußere Magazinrad,
- Fig. 8-10: in einer Seitenansicht die Abgabe eines Werkzeuges von der Werkzeugspindel in das äußere Magazinrad,
- Fig. 11: in perspektivischer Darstellung die Werkzeugspindel und das äußere Magazinrad nach der Abgabe des Werkzeuges in das äußere Magazinrad,
- Fig. 12: eine perspektivische Teildarstellung mit dem äußeren Magazinrad, dem inneren Magazinrad und der Werkzeugspindel,
- Fig. 13: eine axiale Draufsicht auf das äußere Magazinrad und das innere Magazinrad,
- Fig. 14-18: die Abgabe eines Schleifscheibenschutzes in das innere Magazinrad,
- Fig. 19-24: in einer vereinfachten Darstellung die gemeinsame Aufnahme eines Schleifwerkzeuges und eines Schleifscheibenschutzes durch die Werkzeugspindel.

In der dargestellten Ausführung ist die Werkzeugmaschine beispielhaft als Schleifmaschine dargestellt. Es ist ohne Weiteres ersichtlich und aus der folgenden Beschreibung erkennbar, dass die Erfindung auch bei anderen Werkzeugmaschinen, insbesondere Bohr-, Fräs- und Drehmaschinen eingesetzt werden kann.

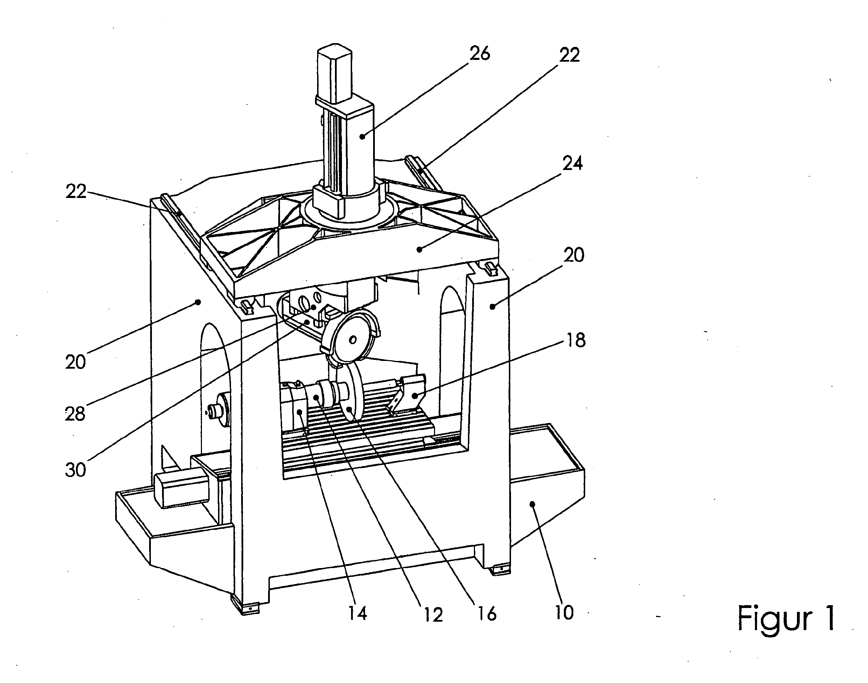

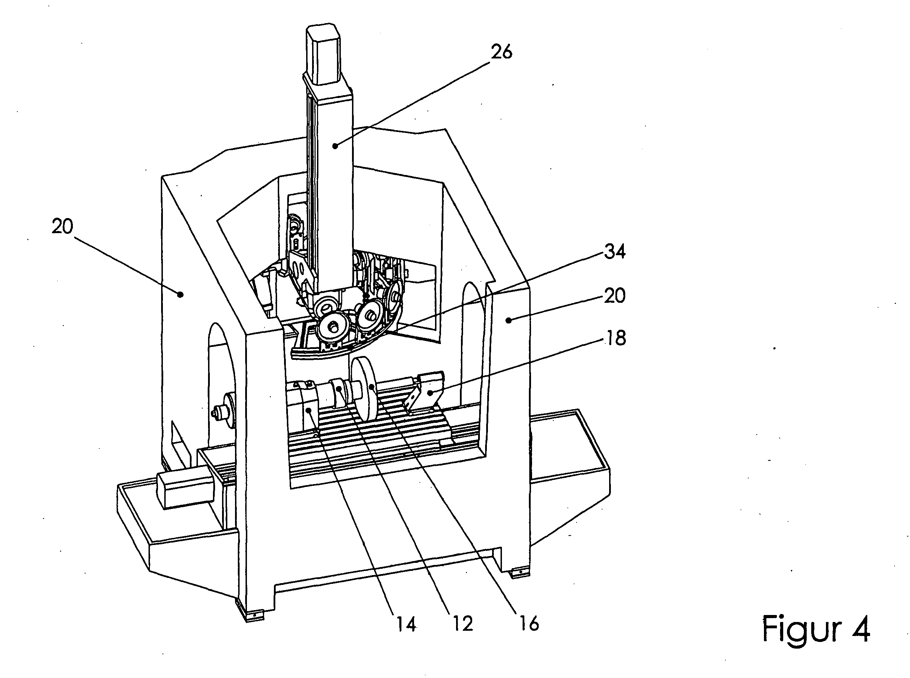

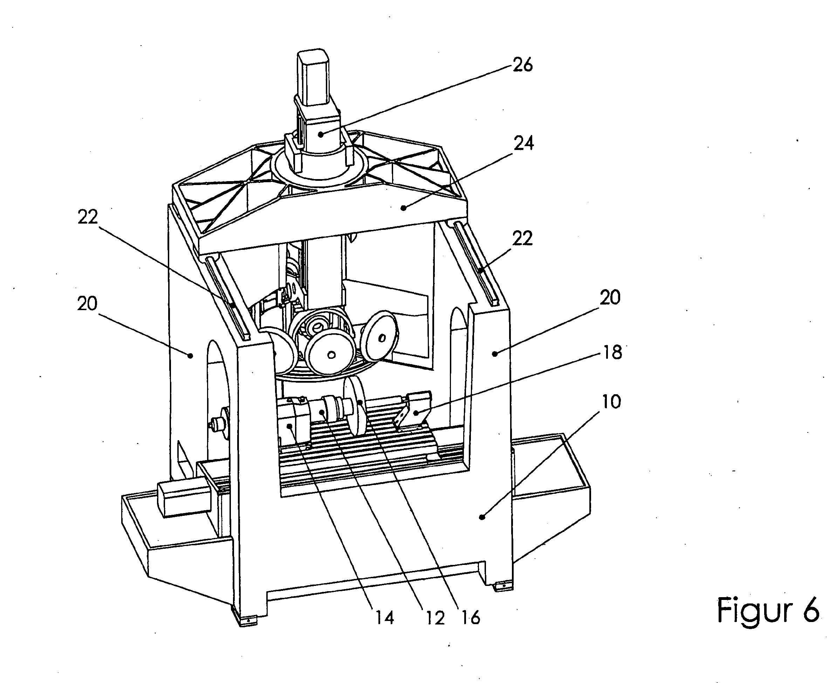

Wie die Figuren 1 bis 6 zeigen, weist die Werkzeugmaschine ein horizontales Maschinenbett 10 auf, auf welchem horizontal in der X-Achse verfahrbar eine Werkstückspindel 12 gelagert ist. Die Werkstückspindel 12 ist horizontal in der X-Achse angeordnet und über einen Werkstückspindelantrieb 14 rotierend antreibbar. An der Werkstückspindel kann ein Werkstück 16 gespannt werden, das gegebenenfalls durch einen Reitstock 18 abgestützt wird. An beiden Seiten des Maschinenbettes 10 ist jeweils eine vertikal nach oben gerichtete Seitenwange 20 ausgebildet. Auf den horizontalen in der Y-Achse verlaufenden Oberseiten der Seitenwangen 20 ist jeweils eine Y-Führung 22 angeordnet. Auf diesen Y-Führungen 22 ist eine Brücke 24 gelagert, die in der Y-Achse gesteuert angetrieben verfahrbar ist und den Arbeitsraum der Werkzeugmaschine zwischen den Seitenwangen 20 überspannt. Zentrisch in der Brücke 24 ist ein Z-Schlitten 26 gelagert, der gesteuert antreibbar in der vertikalen Z-Achse verfahrbar und gesteuert antreibbar um seine vertikale Achse (C-Achse) drehbar ist. Am unteren Ende des Z-Schlittens 26 ist ein Träger 28 befestigt, an welchem eine drehantreibbare Werkzeugspindel 30 mit horizontaler Achse gelagert ist, die in der horizontalen Achse gesteuert verfahrbar ist.

Insoweit entspricht der Aufbau der Werkzeugmaschine der in der deutschen Patentanmeldung 10 2006 011 551.1 beschriebenen Werkzeugmaschine und auf den gesamten Inhalt dieser Patentanmeldung wird zum Zwecke der Offenbarung verwiesen.

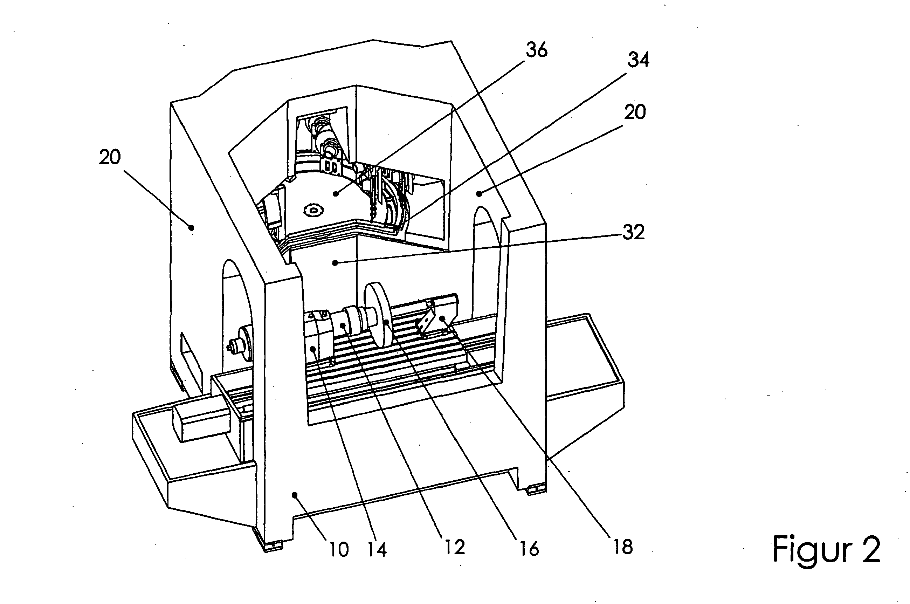

In der Darstellung der Figur 1 befindet sich die Werkzeugspindel 30 in der Arbeitsposition, in welcher ein an der Werkzeugspindel 30 aufgenommenes Werkzeug das Werkstück 16 bearbeitet. Das Werkzeug ist beispielsweise eine Schleifscheibe zur Schleifbearbeitung des Werkstückes 16. In Figur 2 sind zur besseren Erkennbarkeit die Brücke 24 und der Z-Schlitten 26 mit der Werkzeugspindel 30 weggelassen. Es ist zu erkennen, dass der Arbeitsraum auf der von der Bedienerseite (in den Figuren 1 bis 6 die Vorderseite) abgewandten Rückseite nach hinten, z. B. polygonal, ausgewölbt ist, um die Drehung der horizontalen Werkzeugspindel 30 um die vertikale Rotationsachse (C-Achse) zu ermöglichen. Die Rückseite des Arbeitsraumes ist durch wegbewegbare Trennwände 32 abgeschlossen. Hinter diesen Trennwänden 32 befindet sich das nachfolgend beschriebene Werkzeugmagazin, in welchem Werkzeuge gespeichert und zum Einwechseln in die Werkzeugspindel 30 bereit gestellt sind.

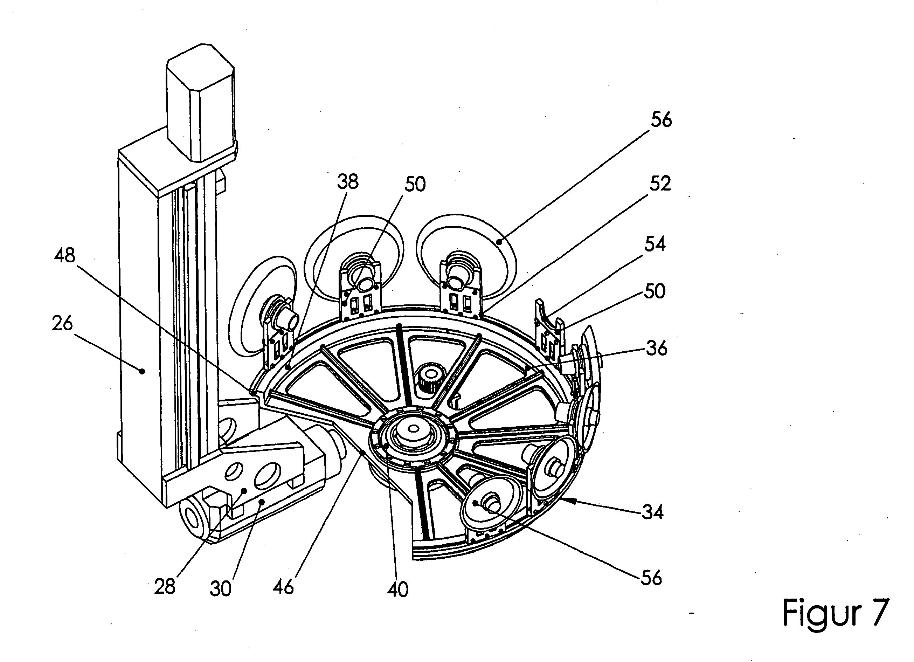

In den Figuren 7 bis 11 ist eine einfache Ausführung des Werkzeugmagazins dargestellt.

Das Werkzeugmagazin weist ein Magazinrad 34 auf, welches um eine vertikale, zur Z-Achse parallele Achse gesteuert drehbar angetrieben wird. Das Magazinrad 34 besteht aus einer in der horizontalen Ebene liegenden kreisförmigen Magazinscheibe 36, an deren Außenumfang ein vertikal nach oben weisender Magazinring 38 angeordnet ist. Die Magazinscheibe 36 kann als geschlossene Scheibe ausgebildet sein, ist vorzugsweise jedoch als Speichenscheibe ausgebildet, wie dies in der Zeichnung dargestellt ist. Die Magazinscheibe 36 sitzt zentrisch auf einer vertikalen Antriebswelle 40, die unterhalb der Magazinscheibe 36 über einen Zahnriemen 42 von einem NC-gesteuerten Motor 44 antreibbar ist.

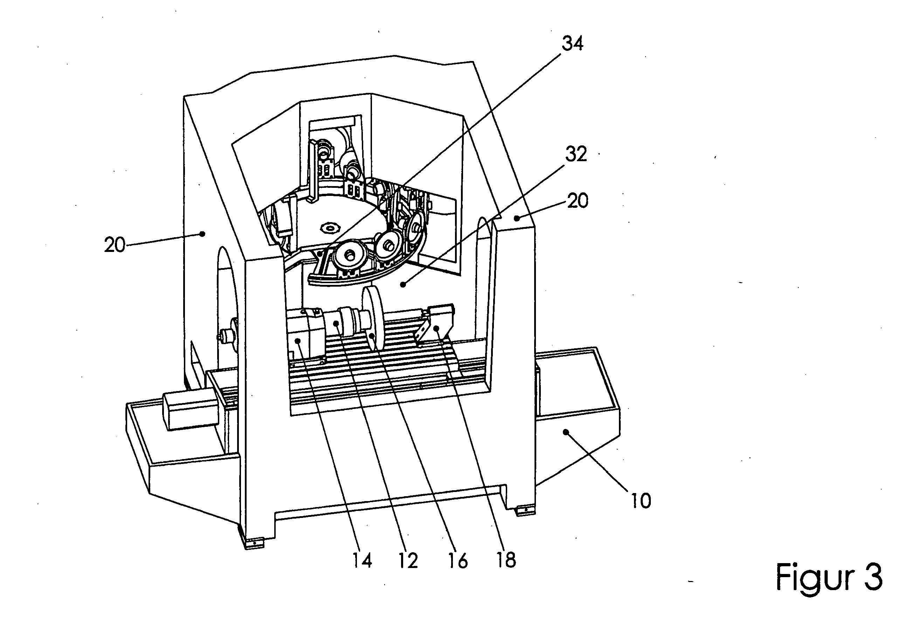

Die Magazinscheibe 36 und damit das gesamte Magazinrad 34 ist in einem Winkelbereich mit einem segmentförmigen Ausschnitt 46 ausgebildet. Die Form dieses Ausschnittes 46 entspricht in ihrem Verlauf dem polygonalen Verlauf der Trennwände 32. Ist das Magazinrad 34 in seiner Drehstellung so ausgerichtet, dass der Ausschnitt 46 dem Arbeitsraum zugewandt ist, so können die Trennwände 32 innerhalb dieses Ausschnittes 46 in die Schließstellung bewegt werden. Sind die Trennwände 32 in ihrer Offenstellung zurückgefahren, so kann das Magazinrad 34 um seine vertikale Achse gedreht werden und greift mit seinem Umfang in den Arbeitsraum der Werkzeugmaschine hinein. Diese beiden Stellungen sind in den Figuren 2 und 3 gezeigt. Die Ausbildung des Magazinrades 34 mit dem segmentartigen Ausschnitt 46 ermöglicht es, die Antriebswelle 40 baulich nahe an dem nach hinten ausgewölbten Arbeitraum anzuordnen, sodass die Grundfläche der Werkzeugmaschine durch das Werkzeugmagazin wenig vergrößert wird.

In den oberen Rand des Magazinringes 38 ist eine in diesem Magazinring 38 koaxial umlaufende T-Nut eingearbeitet. In diese T-Nut 48 sind Werkzeughalter 50 eingesetzt, die mit einem Fuß 52 auf dem Magazinring 38 aufsitzen und in die T-Nut 48 eingreifen. Mit diesem Fuß 52 können die Werkzeughalter 50 in der T-Nut in Umfangsrichtung des Magazinringes 38 verschoben und in der gewünschten Position geklemmt werden. Die Werkzeughalter 50 weisen von dem Fuß 52 vertikal nach oben und bilden jeweils eine sich U-förmig nach oben öffnende Aufnahme 54 für ein Werkzeug. Die Aufnahmen 54 sind entsprechend den zu magazinierenden Werkzeugen ausgebildet. Im dargestellten Ausführungsbeispiel sind Werkzeuge 56 in Form von Schleifscheiben dargestellt, die einen genormten Kegelschaft für eine Hohlschaftkegel-Werkzeugaufnahme aufweisen. Die Aufnahme 54 ist so ausgebildet, dass das Werkzeug 56 von oben in die Aufnahme 54 eingelegt werden kann, wobei der Werkzeughalter 50 mit seiner Aufnahme 54 in die Greifrille des Kegelschaftes eingreift. Das Werkzeug 56 wird in der Aufnahme 54 ohne zusätzliche Befestigung und Verriegelung durch sein Eigengewicht sicher gegen Zentrifugalkräfte und Kippmomente gehalten. Die Werkzeuge 56 werden in die Werkzeughalter 50 so eingesetzt, dass ihre Kegelschäfte von dem Magazinring 38 radial nach innen gerichtet sind, während das eigentliche Werkzeug radial nach außen gerichtet ist. Da der Durchmesser des eigentlichen Werkzeugs in der Regel größer ist als der Durchmesser des Kegelschaftes, ergibt sich hierdurch eine optimale Platzausnützung des Magazinumfanges. Die Werkzeughalter 50 können in der T-Nut 48 in Umfangsrichtung des Magazinringes 38 so verschoben und im gegenseitigen Winkelabstand angeordnet werden, dass entsprechend dem Durchmesser der jeweiligen Werkzeuge 56 eine optimale Ausnützung des Umfanges des Magazinrades 34 erreicht wird. In der jeweils optimierten Winkelposition werden die Werkzeughalter 50 in der T-Nut 48 des Magazinringes 38 geklemmt und fixiert. Die Positionen der Werkzeughalter 50 werden als Winkelpositionswerte in der Steuerung des Motors 44 hinterlegt und können dem jeweiligen Anwendungsfall entsprechend variiert und angepasst werden.

Der Werkzeugwechsel wird anhand der Figuren 7 bis 11 erläutert.

Figur 7 zeigt die Arbeitsstellung der Werkzeugmaschine. Das Magazinrad 34 befindet sich in der in Figur 2 gezeigten Stellung, in welcher der Ausschnitt 46 mit der Lage der Trennwände 32 übereinstimmt. Im Bereich dieses Ausschnittes 46 ist das Magazinrad 34 durch die in Figur 7 nicht dargestellten Trennwände 32 von dem Arbeitsraum abgeschirmt. Die Bearbeitung eines Werkstückes 16 kann durchgeführt werden. Das Werkstück 16 wird auf dem Maschinenbett 10 in der X-Achse bewegt, wobei es gegebenenfalls auch noch um seine eigene Achse gedreht werden kann (A-Achse). Das Werkzeug 56 ist in der Werkzeugspindel 30 gespannt. Das Werkzeug 56 führt mittels des Z-Schlittens 26 eine Vertikalbewegung durch, wobei die horizontale Achse der Werkzeugspindel 30 um die vertikale Achse des Z-Schlittens 26 drehbar ist. Der Z-Schlitten 26 kann mittels der Brücke 24 in der Y-Achse verfahren werden. Zusätzlich kann die Werkzeugspindel 30 in ihrer Achse bezüglich des Z-Schlittens 26 in dem Träger 28 horizontal verfahren werden. Gegebenenfalls kann zusätzlich auch der Neigungswinkel der Achse der Werkzeugspindel 30 gegen die Horizontalebene verstellt werden.

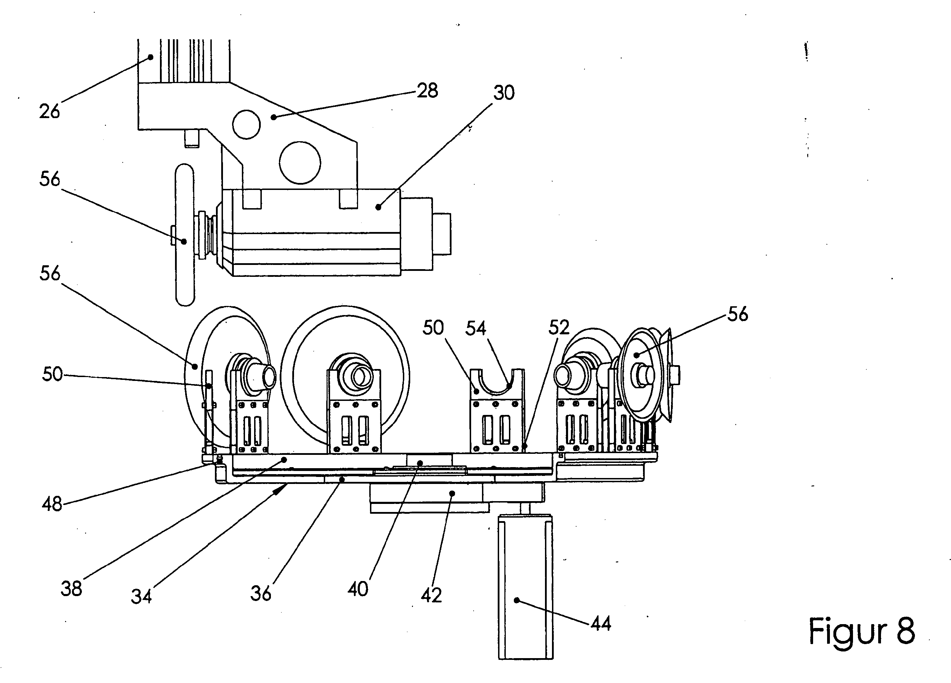

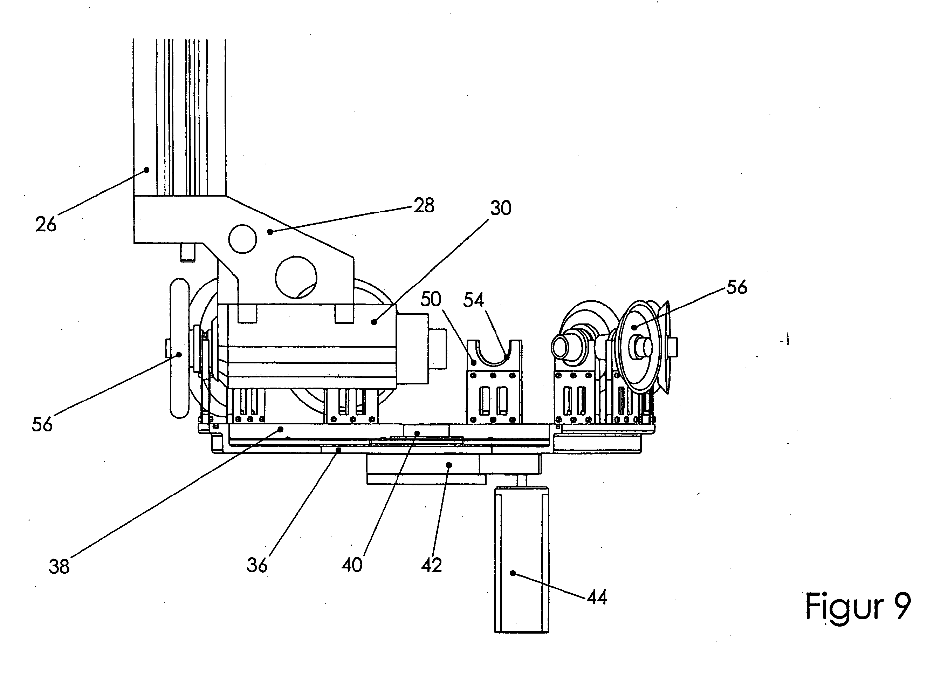

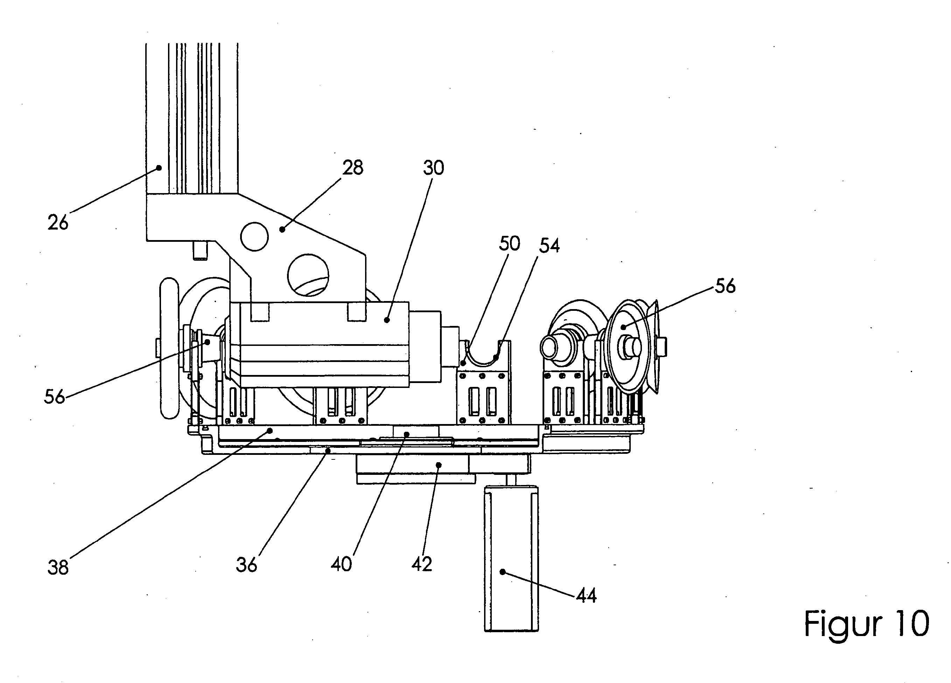

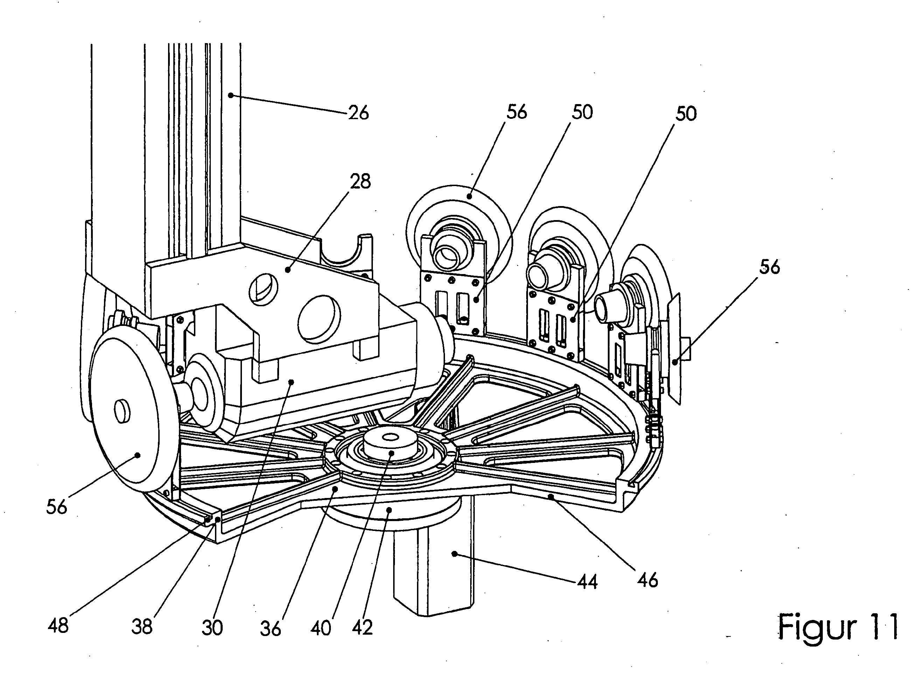

Um einen Werkzeugwechsel durchzuführen, werden zunächst die Trennwände 32 weggefahren, sodass das Magazinrad 34 in den Arbeitsraum hineindrehen kann. Wie Figur 8 zeigt, wird das Magazinrad 34 über den gesteuerten Antrieb des Motors 44 so gedreht, dass ein freier Werkzeughalter 50' in die Wechselposition gebracht wird, d. h. in der Ebene der Y-Bewegung des Z-Schlittens 26 positioniert ist. Der Z-Schlitten 26 wird so gedreht, dass der Träger 28 mit der Werkzeugspindel 30 ebenfalls in dieser Ebene ausgerichtet ist. Nun fährt die Brücke 24 in der Y-Achse nach hinten, bis sich die Werkzeugspindel 30 oberhalb des Magazinrades 34 und innerhalb des Umfanges des Magazinringes 38 befindet, wie dies in Figur 8 dargestellt ist. Dann wird der Z-Schlitten 26 vertikal nach unten gefahren, wodurch das Werkzeug 56 mit seiner Greifrille in die Aufnahme 54 des freien Werkzeughalters 50' eingelegt wird, wie dies in Figur 9 gezeigt ist. Anschließend fährt der Z-Schlitten 26 in der Y-Achse weiter nach hinten, wodurch die Werkzeugspindel 30 radial von dem Magazinring 38 nach innen bewegt wird und die HSK-Aufnahme der Werkzeugspindel 30 den Kegelschaft des Werkzeuges 56 freigibt, wie dies in den Figuren 10 und 11 gezeigt ist. Alternativ zu einem Verfahren des Z-Schlittens 26 in der Y-Achse kann auch die Werkzeugspindel 30 in dem Träger 28 verfahren werden. In der in den Figuren 10 und 11 gezeigten Stellung kann nun das Magazinrad 34 über den Motor 44 gesteuert verdreht werden, bis das nächste ausgewählte Werkzeug 56 in der Wechselposition radial vor der Werkzeugaufnahme der Werkzeugspindel 30 positioniert ist. In dieser Stellung wird die Werkzeugspindel 30 mittels des Z-Schlittens 26 wieder radial nach außen geschoben, wodurch sich ihre Werkzeugaufnahme auf den Kegelschaft des nun positionierten nächsten Werkzeuges schiebt und diesen spannt. Mittels des Z-Schlittens 26 wird nun die Werkzeugspindel 30 mit dem gespannten nächsten Werkzeug 56 nach oben gefahren, wodurch das Werkzeug 56 aus dem Werkzeughalter 50 herausgehoben wird. Sobald sich die Werkzeugspindel 30 mit dem Werkzeug 56 oberhalb des Magazinringes 38 befindet, kann die Werkzeugspindel 30 wieder in die Arbeitsstellung gefahren werden. Das Magazinrad 34 wird wieder in die in den Figuren 2 und 7 gezeigte Grundstellung zurückgedreht, die Trennwände 32 werden geschlossen und die Bearbeitung des Werkstückes 16 mit dem neuen Werkzeug 56 kann beginnen.

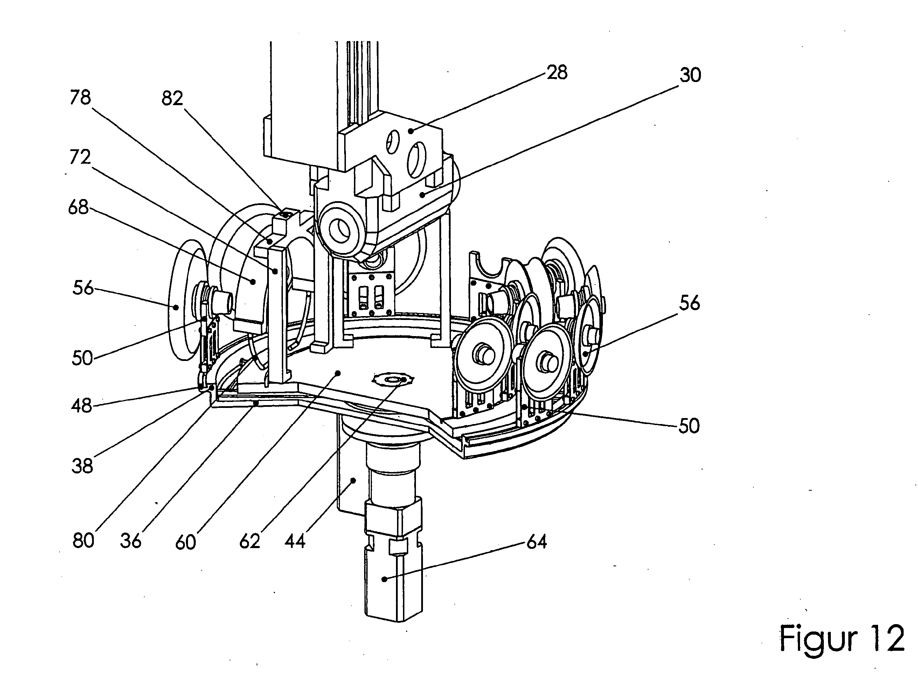

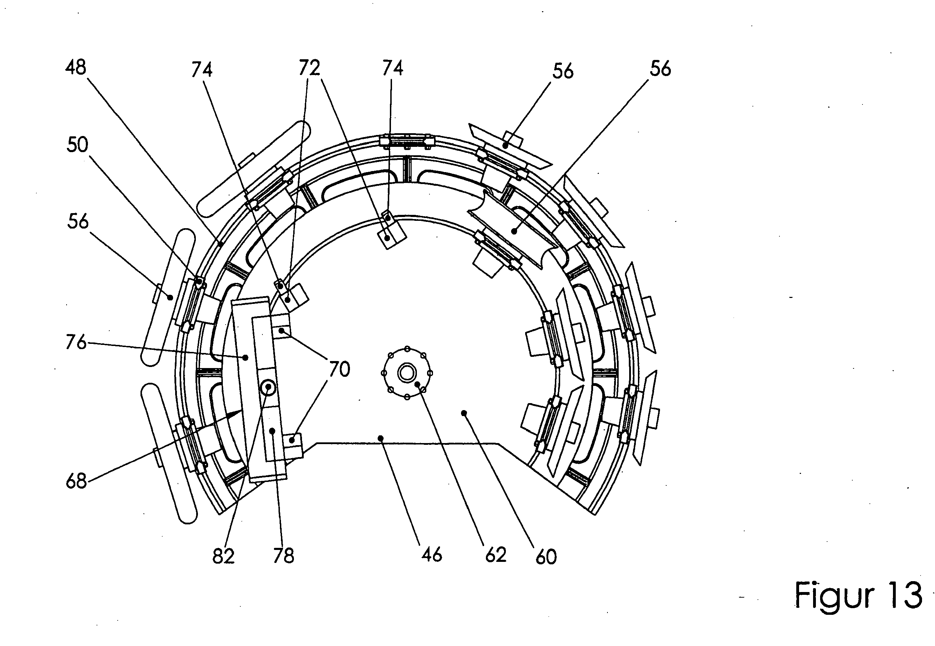

Weiter weist das Werkzeugmagazin zusätzlich zu dem ersten äußeren Magazinrad 34 ein zweites inneres Magazinrad 58 auf, wie dies insbesondere in den Figuren 12 und 13 dargestellt ist.

Das innere Magazinrad 58 ist koaxial zu dem äußeren Magazinrad 34 angeordnet und weist eine Magazinscheibe 60 auf, die konzentrisch und parallel auf der Magazinscheibe 36 des äußeren Magazinrades 34 angeordnet ist. Der Außendurchmesser der Magazinscheibe 60 ist kleiner als der Innendurchmesser des Magazinringes 38 des äußeren Magazinrades 34. Das innere Magazinrad 58 ist frei gegenüber dem äußeren Magazinrad 34 drehbar. Hierzu weist die Magazinscheibe 60 des inneren Magazinrades 58 eine vertikale zentrische Antriebswelle 62 auf, die koaxial drehbar in der als Hohlwelle ausgebildeten Antriebswelle 40 des äußeren Magazinrades 34 gelagert ist. Das innere Magazinrad 58 ist über seine Antriebswelle 62 mittels eines unterhalb des äußeren Magazinrades 34 angeordneten NC-steuerbaren Motors 64 unabhängig von dem äußeren Magazinrad 34 antreibbar.

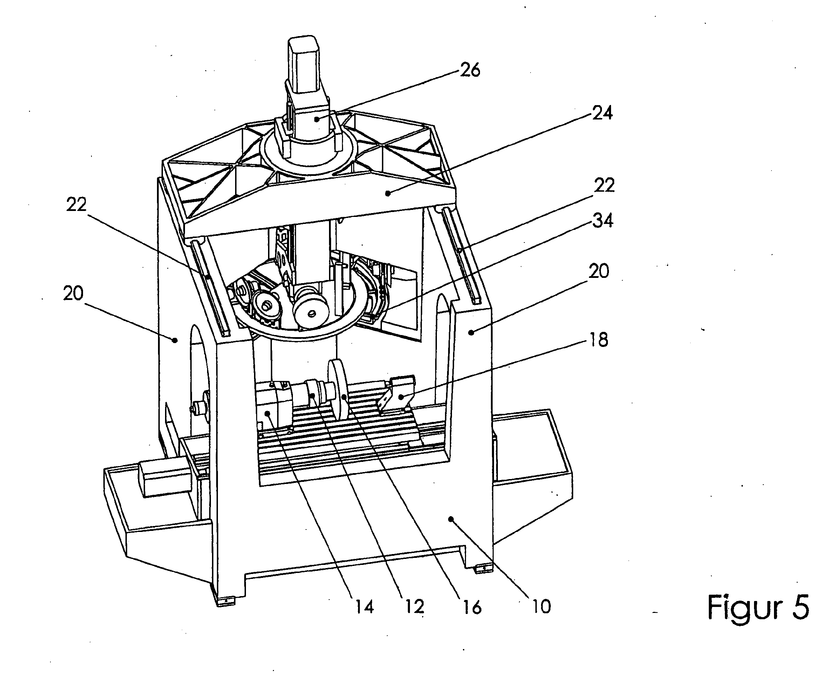

Wie Figur 5 zeigt, kann das innere Magazinrad 38 im Wesentlichen in entsprechender Weise ausgebildet sein wie das äußere Magazinrad 34. Auf der Oberseite der Magazinscheibe 60 läuft konzentrisch ein Magazinring, in welchem Werkzeughalter in ihrer Winkelposition einstellbar angeordnet und geklemmt werden können. Der Magazinring und die Werkzeughalter können in entsprechender Weise ausgebildet sein, wie dies vorstehend für das äußere Magazinrad 34 beschrieben ist. Der Magazinring mit den Werkzeughaltern ist jedoch - wie dies Figur 5 zeigt - mit einem kleineren Radius ausgebildet als die Magazinscheibe 60, sodass zwischen dem Magazinring des inneren Magazinrades 58 und dem Magazinring 38 des äußeren Magazinrades 34 ein radialer Abstand frei bleibt, welcher für die Aufnahme der in dem inneren Magazinrad 58 bevorrateten Werkzeuge 56 erforderlich ist.

Die Entnahme und Abgabe der Werkzeuge 56 in das innere Magazinrad 58 erfolgt dabei in gleicher Weise, wie dies für das äußere Magazinrad 34 vorstehend beschrieben ist. Das innere Magazinrad 58 weist ebenfalls einen Ausschnitt 46 auf, der bei Winkelausrichtung des äußeren Magazinrades 34 und des inneren Magazinrades 58 mit dem Ausschnitt 46 des äußeren Magazinrades 34 deckungsgleich ist. Insbesondere weist auch der Magazinring des inneren Magazinrades 58 einen entsprechenden Winkelausschnitt auf, damit die Werkzeuge 56 im äußeren Magazinrad 34 für die Werkzeugspindel 30 in der oben beschriebenen Weise durch diesen Ausschnitt im Magazinring des inneren Magazinrades 58 frei zugänglich sind.

Durch die unabhängige gesteuerte Einstellbarkeit der Drehpositionen des äußeren Magazinrades 34 und des inneren Magazinrades 58 können diese unabhängig voneinander in die Wechselposition gebracht werden und Werkzeuge 56 können in beliebig programmierbarer Weise alternativ in und aus dem äußeren Magazinrad 34 oder dem inneren Magazinrad 58 gewechselt werden. Das innere Magazinrad 58 erhöht somit die Zahl der Werkzeug-Speicherplätze des gesamten Werkzeugmagazins, ohne die Außenabmessungen des Werkzeugmagazins zu vergrößern.

Eine besondere Verwendung des inneren Magazinrades 58 ist in den Figuren 12 und 13 gezeigt. In dieser Ausführung dient das Werkzeugmagazin dazu, sowohl spanabhebende Werkzeuge 56, insbesondere Schleifscheiben, als auch zugehörige Schutzvorrichtungen, insbesondere einen Schleifscheibenschutz, zum Einwechseln zur Verfügung zu halten. Wie die Figuren 12 und 13 zeigen, sind in dieser Ausführung in dem äußeren Magazinrad 34 die Werkzeuge 56 in der vorstehend beschriebenen Weise bereitgehalten. Das innere Magazinrad 58 trägt die Schutzvorrichtungen, die insbesondere die Form eines Schleifscheibenschutzes haben.

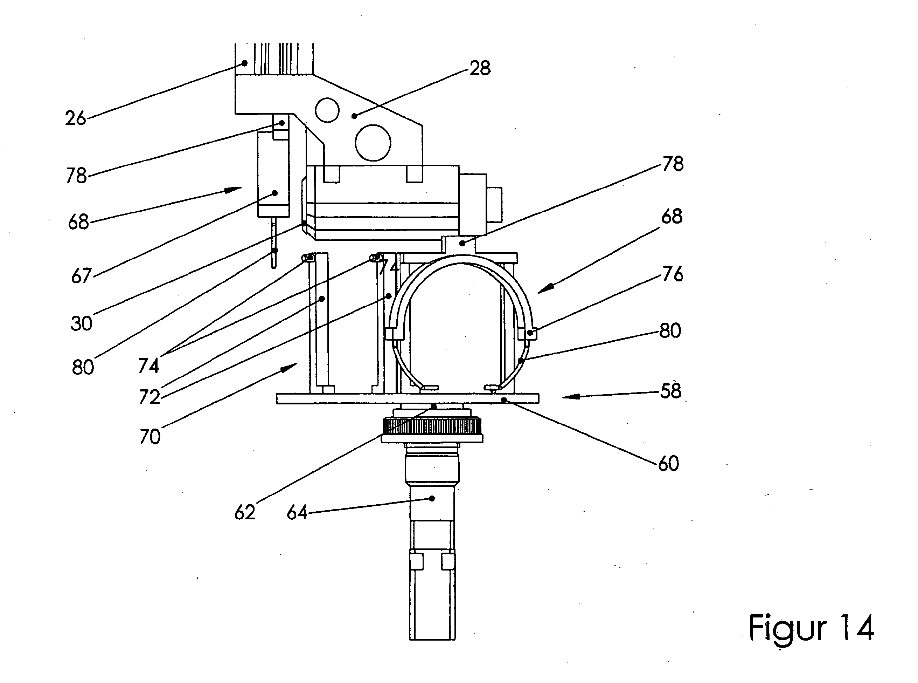

In den Figuren 14 bis 18 ist der Wechsel eines solchen Schleifscheibenschutzes 68 dargestellt. Dabei ist zur leichteren Verständlichkeit nur das innere Magazinrad 58 des in den Figuren 12 und 13 dargestellten kompletten Magazins gezeigt, während das äußere Magazinrad 34 weggelassen ist.

Auf der Magazinscheibe 60 des inneren Magazinrades 58 sind gegen dem Umfang radial beabstandet und auf einem konzentrischen Kreis im Winkel gegeneinander versetzt Schutzaufnahmen 70 angebracht. Die Schutzaufnahmen 70 bestehen jeweils aus einem Paar von senkrecht von der Magazinscheibe 60 nach oben abstehenden Trägerarmen 72, die an ihrem freien oberen Ende jeweils einen radial nach außen gerichteten Aufnahmedorn 74 aufweisen. Der Abstand der jeweils zwei Trägerarme 72 einer Schutzaufnahme 70 und die Anordnung ihrer Aufnahmedorne 74 sind so gewählt, dass ein Schleifscheibenschutz 68 auf diese Aufnahmedorne 74 aufgeschoben und durch diese getragen werden kann. Der Schleifscheibenschutz 68 besteht aus einer Schutzabdeckung 76, die den Außenumfang der Schleifscheibe teilweise abdeckt, einem oben an der Schutzabdeckung 76 angebrachten Tragbügel 78 und gegebenenfalls Kühlmitteldüsen 80. Der Tragbügel 78 verläuft horizontal und im Wesentlichen tangential zu der Schutzabdeckung 76. In den beiden Enden des Tragbügels 78 sind jeweils Bohrungen für die Aufnahmedorne 74 vorgesehen. Mittig oben in dem Tragbügel 78 ist eine vertikale Kupplungsbohrung 82 vorgesehen. An dem Träger 28 des Z-Schlittens 26 ist ein nach unten ragender Kupplungszapfen 84 vor der Werkzeugaufnahme der Werkzeugspindel 30 angeordnet, der zur Fixierung des Schleifscheibenschutzes 68 mit der Kupplungsbohrung 82 zusammenwirkt.

Figur 14 zeigt die Arbeitsstellung, in welcher entsprechend den Figuren 1 und 2 der Schleifscheibenschutz 68 an dem Träger 28 verriegelt ist und mit seiner Schutzabdeckung 76 die in Figur 14 nicht gezeigte Schleifscheibe abdeckend umgreift. Über die Kühlmitteldüsen 80 wird ein Kühlmittel auf das zu bearbeitende Werkstück 16 aufgesprüht. Das Magazinrad 58 befindet sich - ebenso wie das nicht dargestellte äußere Magazinrad 34 - in der Grundstellung, in welcher der Ausschnitt 46 mit den geschlossenen Trennwänden 32 zur Deckung kommt.

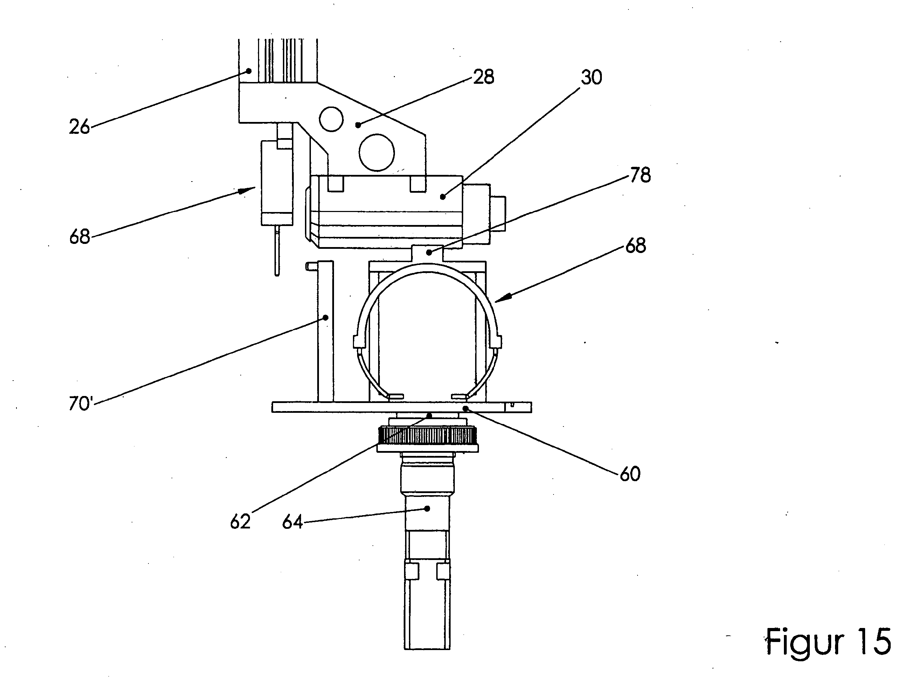

Für den Wechsel des Schleifscheibenschutzes 68 wird nach Öffnen der Trennwände 32 das innere Magazinrad 58 in die in Figur 15 gezeigte Wechselposition gedreht, in welcher eine freie Schutzaufnahme 70' dem Arbeitsraum zugewandt und in der Y-Z-Ebene des Z-Schlittens 26 ausgerichtet ist.

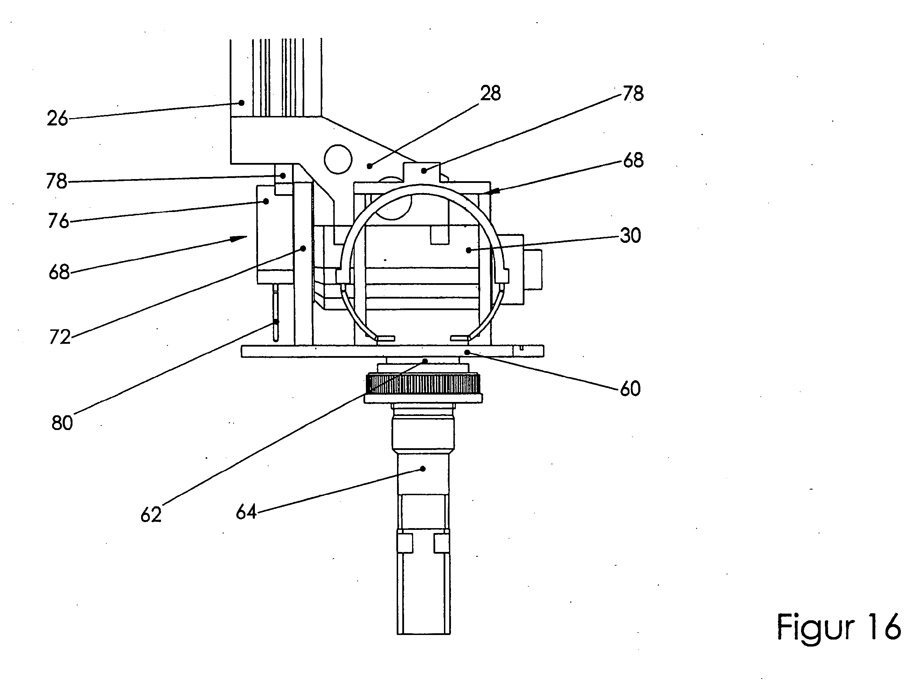

In dieser Position des Magazinrades 58 wird der Z-Schlitten 26 mit ebenfalls in der Y-Z-Ebene ausgerichteter Werkzeugspindel 30 abgesenkt, bis der an dem Träger 28 verriegelte Schleifscheibenschutz 68 vor der freien Schutzaufnahme 70' ausgerichtet ist. Dann wird der Z-Schlitten 26 mit dem Träger 28 nach hinten, d. h. in Figur 16 nach rechts, verschoben, wodurch der Tragbügel 78 des Schleifscheibenschutzes 68 auf die Aufnahmedorne 74 der freien Schutzaufnahme 70' geschoben wird. Diese Position ist in Figur 16 gezeigt.

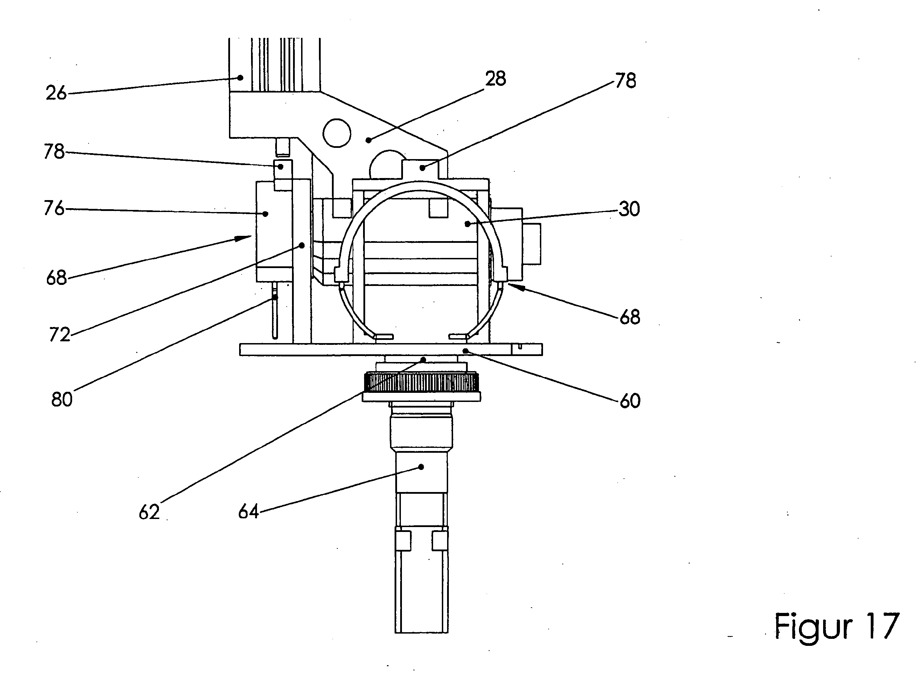

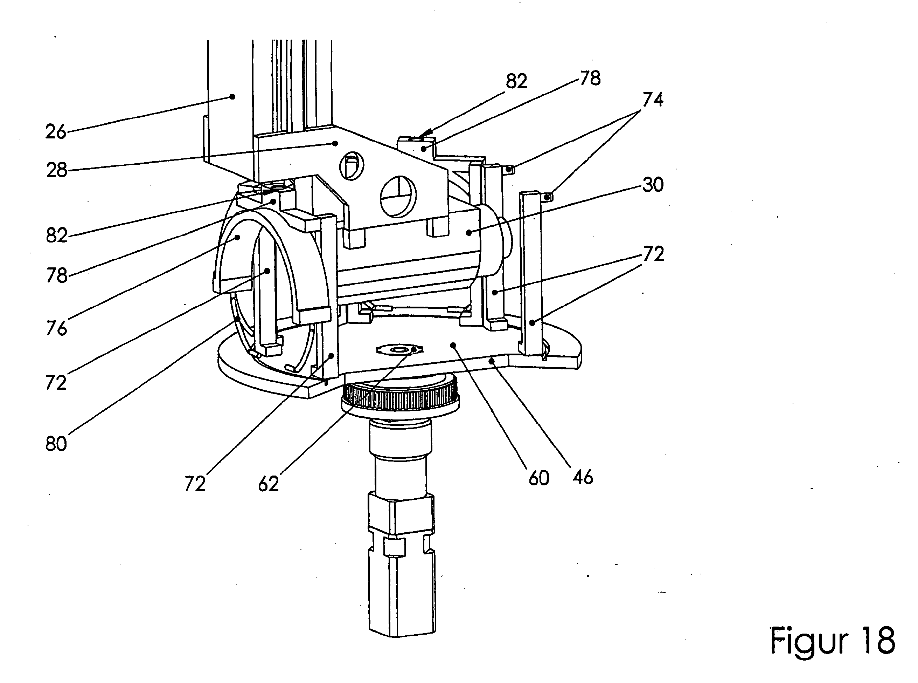

Anschließend wird der Z-Schlitten 26 vertikal nach oben gefahren, wodurch der Kupplungszapfen 84 aus der Kupplungsbohrung 82 des nun in der Schutzaufnahme 70 sitzenden Schleifscheibenschutzes 68 gezogen wird. Dies ist in den Figuren 17 und 18 gezeigt.

Nun kann das Magazinrad 58 gegenüber dem Träger 28 mit der Werkzeugspindel 30 gedreht werden, um einen anschließend einzuwechselnden Schleifscheibenschutz 68 in die Wechselposition vor der Werkzeugspindel 30 zu positionieren. Ist dies geschehen, so wird der Träger 28 mit dem Kupplungszapfen 84 wieder abgesenkt, um den neu einzuwechselnden, nun positionierten Schleifscheibenschutz 68 mit dem Träger 28 zu kuppeln. Anschließend wird der Z-Schlitten 26 mit dem Träger 28 radial nach vorn, d. h. in der Zeichnung nach links verschoben, um den eingekuppelten Schleifscheibenschutz 68 von den Aufnahmedornen 74 abzuziehen, sodass die Werkzeugspindel 30 nun mit dem neu eingekuppelten Schleifscheibenschutz 68 arbeiten kann.

Es ist ohne weiteres aus den Figuren 12 und 13 ersichtlich, dass aufgrund der unabhängig gesteuerten Verdrehbarbeit des ersten Magazinrades 34 und des zweiten Magazinrades 58 die Werkzeuge 56 und die Schutzeinrichtungen 68 unabhängig voneinander gewechselt werden können. Es können dadurch unterschiedliche Werkzeuge 56 mit verschiedenen Schutzeinrichtungen 68 beliebig kombiniert werden. Falls ein Werkzeug, z. B. in Folge von Verschleiß, gegen ein gleichartiges neues Werkzeug gewechselt werden muss, kann nur das Werkzeug gewechselt werden, während der Schleifscheibenschutz nicht ausgetauscht werden muss.

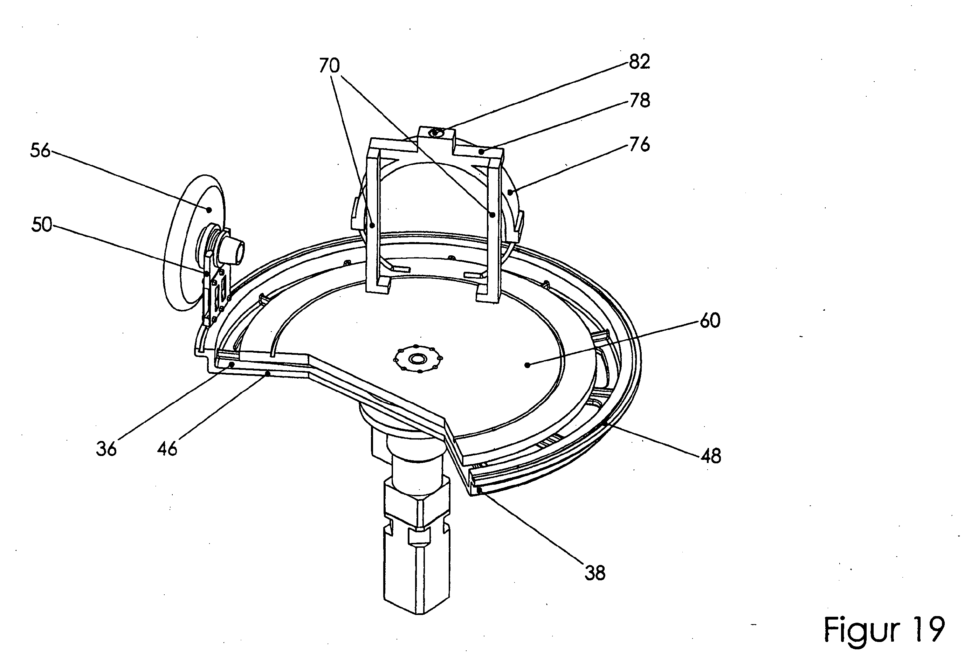

In den Figuren 19 bis 24 ist schließlich dargestellt, wie ein gleichzeitiger Wechsel eines Werkzeuges 56 und einer zugehörigen Schutzeinrichtung, z. B. eines Schleifscheibenschutzes 68, erfolgen kann. Zur einfachen und übersichtlichen Darstellung ist nur ein Werkzeug 56 in dem äußeren Magazinrad 34 und ein Schleifscheibenschutz 68 in dem inneren Magazinrad 58 dargestellt. Die übrigen Werkzeuge und Schleifscheibenschutzeinrichtungen sind weggelassen.

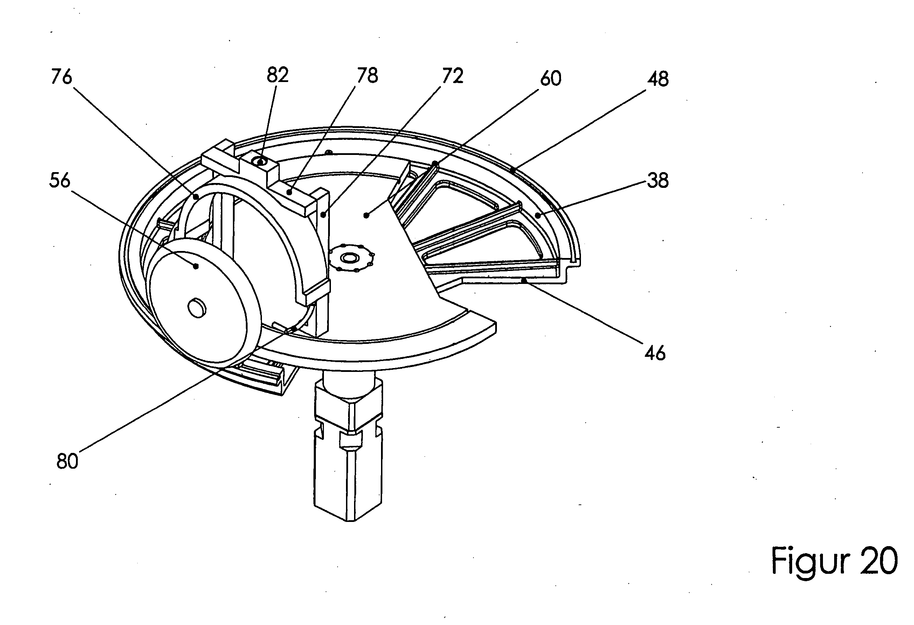

Figur 19 zeigt die Grundstellung, während der Werkstück-Bearbeitungszeit. Nach Beendigung der Bearbeitung und nach dem Öffnen der Trennwände 32 werden das einzuwechselnde Werkzeug 56 und der einzuwechselnde zugehörige Schleifscheibenschutz 68 radial fluchtend in der auf den Arbeitsraum gerichteten Wechselposition ausgerichtet, wie dies Figur 20 zeigt.

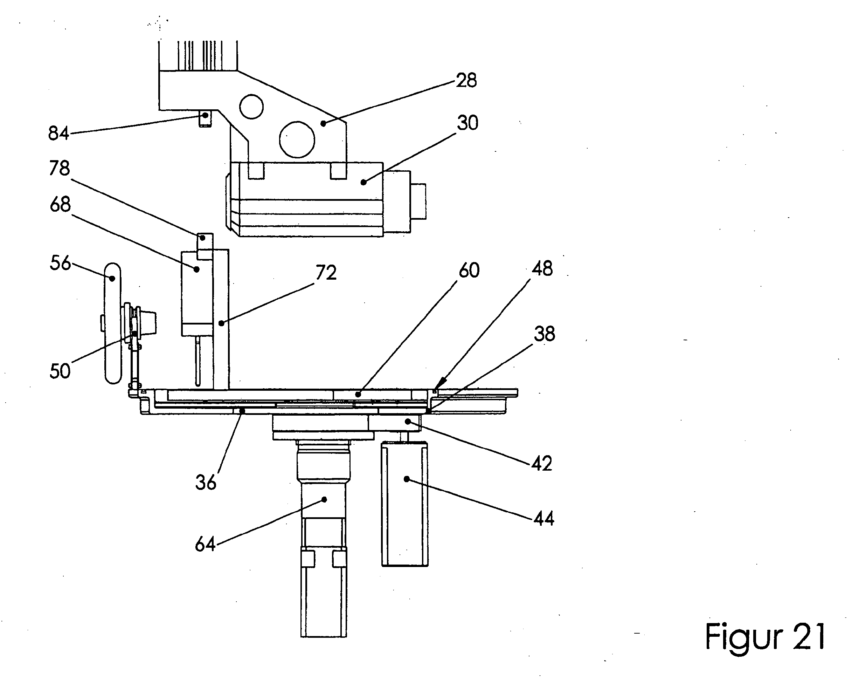

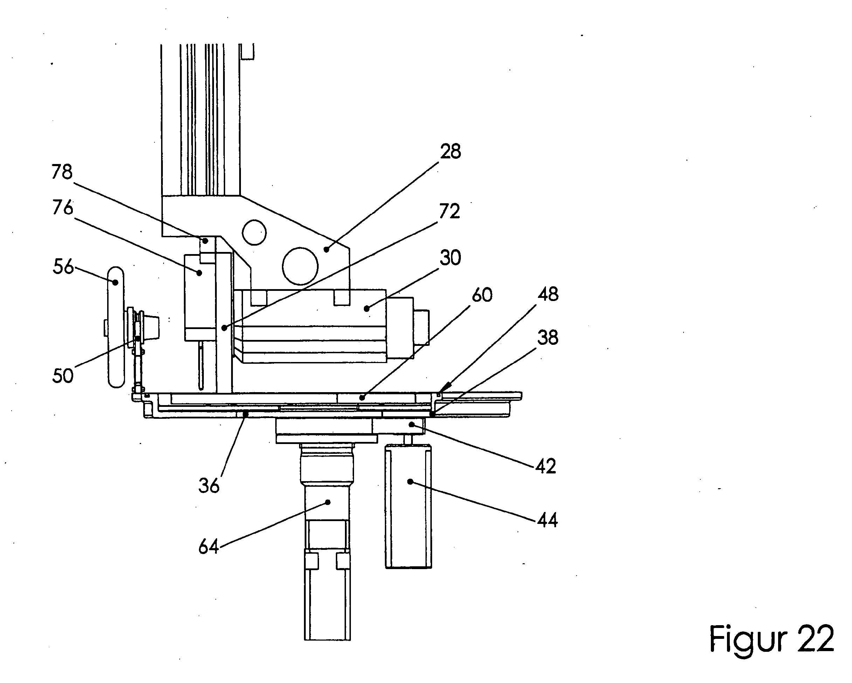

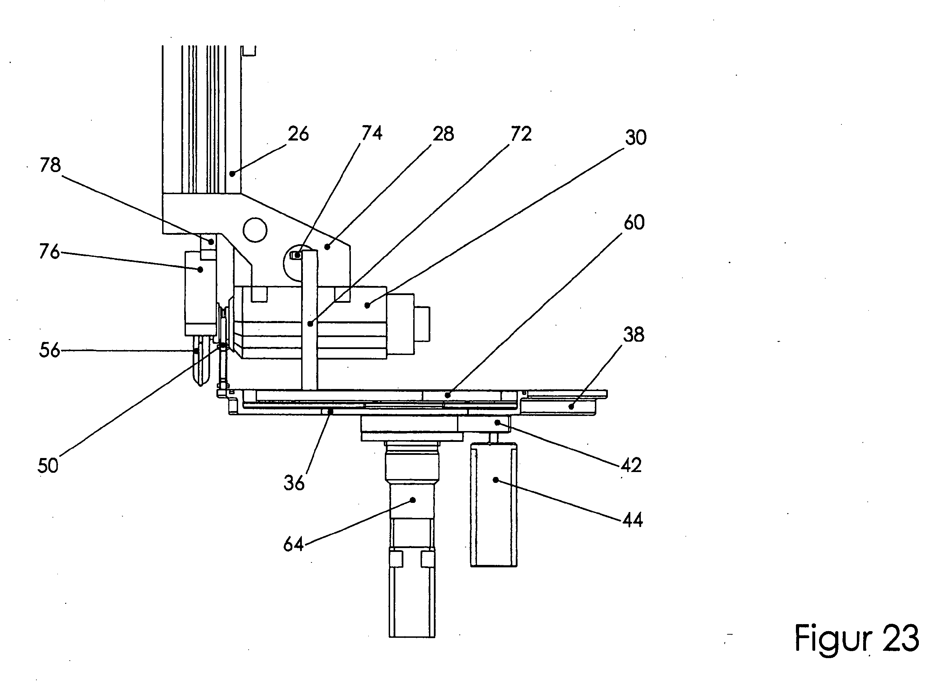

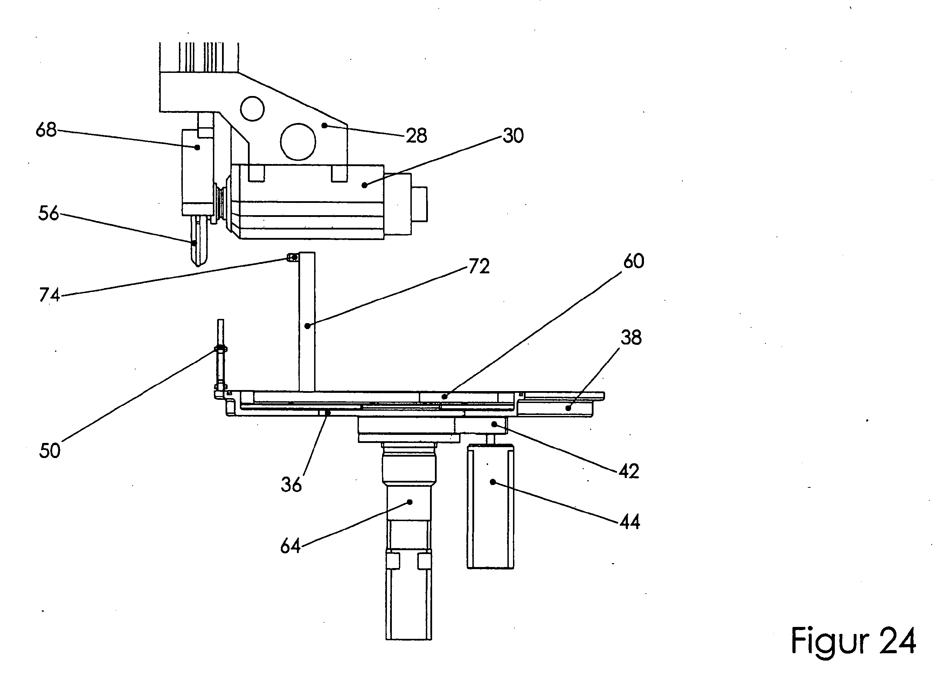

Anschließend wird der Z-Schlitten 26 mit dem Träger 28 und der Werkzeugspindel 30 oberhalb des Werkzeugmagazines über den Schleifscheibenschutz 68 gefahren, wie dies Figur 21 zeigt. Dann wird der Z-Schlitten 26 vertikal abgesenkt, wobei der Kupplungszapfen 84 des Trägers 28 in die Kupplungsbohrung 82 eingreift und der Schleifscheibenschutz 68 mit dem Träger 28 gekuppelt wird. Dies zeigt Figur 22. Anschließend wird der Z-Schlitten 26 in der Y-Achse vorgeschoben, wie dies Figur 23 zeigt. Dabei wird der über den Kupplungszapfen 84 mit dem Träger 28 gekuppelte Schleifscheibenschutz 68 von den Aufnahmedornen 74 seiner Schutzaufnahme 70 in radialer Richtung abgezogen und die Werkzeugspindel 30 wird mit ihrer Werkzeugaufnahme auf den Werkzeugschaft des Werkzeuges 56 geschoben, sodass das Werkzeug 56 an der Werkzeugspindel 30 gespannt werden kann, wie dies in Figur 23 gezeigt ist. Anschließend wird der Z-Schlitten 26 vertikal hochgefahren, sodass das Werkzeug 56 aus seinem Werkzeughalter 50 herausgehoben wird, wie dies in Figur 24 gezeigt ist. Die Werkzeugspindel 30 mit dem gespannten Werkzeug 56 und dem an dem Träger 28 gekuppelten Schleifscheibenschutz 68 können nun in den Arbeitsraum zur Bearbeitung des Werkstückes verfahren werden.

Die Abgabe eines Werkzeuges 56 und eines zugehörigen Schleifscheibenschutzes 68 in das Werkzeugmagazin erfolgt in umgekehrter Reihenfolge dieser Schritte.

### Bezugszeichenliste

- 10: Maschinenbett
- 12: Werkstückspindel
- 14: Werkstückspindelantrieb
- 16: Werkstück
- 18: Reitstock
- 20: Seitenwangen
- 22: Y-Führungen
- 24: Brücke
- 26: Z-Schlitten
- 28: Träger
- 30: Werkzeugspindel
- 32: Trennwände
- 34: äußeres Magazinrad
- 36: Magazinscheibe
- 38: Magazinring
- 40: Antriebswelle
- 42: Zahnriemen
- 44: Motor
- 46: Ausschnitt
- 48: T-Nut
- 50: Werkzeughalter
- 50': freier Werkzeughalter
- 52: Fuß
- 54: Aufnahme
- 56: Werkzeuge
- 58: inneres Magazinrad
- 60: Magazinscheibe
- 62: Antriebswelle
- 64: Motor
- 68: Schleifscheibenschutz
- 70: Schutzaufnahmen
- 70': freie Schutzaufnahme
- 72: Trägerarme
- 74: Aufnahmedorn
- 76: Schutzabdeckung
- 78: Tragbügel
- 80: Kühlmitteldüsen
- 82: Kupplungsbohrung
- 84: Kupplungszapfen

## Patentansprüche

1. Werkzeugmaschine mit wenigstens einer Werkzeugspindel (30) und mit einem Werkzeugspeicher, der mehrere Werkzeuge (56) in Werkzeughaltern (50) aufnimmt und gesteuert bewegbar ist, um jeweils einen auswählbaren Werkzeughalter (50) in eine Wechselposition zu bringen, wobei die Werkzeuge in den Werkzeughaltern so angeordnet sind, dass ihre Achse in der Bewegungsebene des Werkzeugspeichers liegt, wobei die Werkzeugspindel (30) die Werkzeuge in der Wechselposition aus dem Werkzeughalter entnehmen und in den Werkzeughalter abgeben kann, indem die Werkzeugspindel axial fluchtend gegen das Werkzeug bewegt wird, wobei der Werkzeugspeicher zwei Werkzeugmagazine (34, 58) aufweist, wobei in jedem der zwei Werkzeugmagazine (34, 58) Werkzeuge in Werkzeughaltern aufgenommen sind, wobei die Werkzeuge in den zwei Werkzeugmagazinen (34, 58) mit gleicher Achsausrichtung und gegenüber den Werkzeugen des jeweils anderen Werkzeugmagazins in ihrer Achsrichtung beabstandet angeordnet sind, und wobei die zwei Werkzeugmagazine in parallelen Bewegungsebenen unabhängig voneinander gesteuert bewegbar sind, um ihre jeweiligen ausgewählten Werkzeughalter in die Wechselposition zu bringen,
**dadurch gekennzeichnet, dass**
die zwei Werkzeugmagazine (34, 58) in ihrer Bewegungsebene als konzentrisch umlaufende Magazinräder (34,58) ausgebildet sind und dass die Werkzeuge in den Werkzeughaltern mit ihrer Achse radial zu der Umlaufbahn angeordnet sind.

2. Werkzeugmaschine nach Anspruch 1,
**dadurch gekennzeichnet, dass** die Werkzeuge in den Werkzeughaltern mit radial in die Innenseite der Umlaufbahn gerichtetem Schaft aufgenommen sind und dass die Werkzeugspindel (30) von der Innenseite der Umlaufbahn radial gegen die Werkzeuge bewegbar ist.

3. Werkzeugmaschine nach Anspruch 1 oder 2,
**dadurch gekennzeichnet, dass** die Werkzeughalter (50) an dem äußeren Magazinrad (34) auf einem größeren Radius angeordnet sind als die Werkzeughalter (70) an dem inneren Magazinrad (58).

4. Werkzeugmaschine nach einem der vorhergehenden Ansprüche, **dadurch gekennzeichnet, dass** das der Werkzeugspindel (30) beim Wechsel zugewandte Werkzeugmagazin (58) einen freien Bereich aufweist, der in die Wechselposition gebracht werden kann, damit die Werkzeugspindel (30) durch diesen freien Bereich des Werkzeugmagazins (58) unbehindert gegen das andere Werkzeugmagazin (34) bewegt werden kann.

5. Werkzeugmaschine nach einem der vorhergehenden Ansprüche, **dadurch gekennzeichnet, dass** die zwei Werkzeugmagazine (34, 58) modular aufgebaut sind.

6. Werkzeugmaschine nach Anspruch 3,
**dadurch gekennzeichnet, dass** die Magazinräder (34, 58) einen segmentförmigen Ausschnitt (46) aufweisen, in welchen der Arbeitsraum der Werkzeugmaschine eingreift, wenn sich die Magazinräder (34, 58) in ihrer Ruheposition befinden.

7. Werkzeugmaschine nach einem der vorhergehenden Ansprüche, die als Schleifmaschine ausgebildet ist,
**dadurch gekennzeichnet, dass** in dem Werkzeugspeicher Werkzeuge (56), insbesondere Schleifwerkzeuge, und Zusatzvorrichtungen, insbesondere Schleifscheibenschutze (68) aufgenommen sind.

8. Werkzeugmaschine nach Anspruch 7,
**dadurch gekennzeichnet, dass** Werkzeuge (56) in dem äußeren Magazinrad (34) und Zusatzvorrichtungen (68) in dem inneren Magazinrad (58) aufgenommen sind.

9. Werkzeugmaschine nach Anspruch 8,
**dadurch gekennzeichnet, dass** das äußere Magazinrad (34) und das innere Magazinrad (58) mit einander zugeordneten Werkzeugen (56) und Zusatzvorrichtungen (68) in die Wechselposition gebracht werden können, wobei das jeweilige Werkzeug (56) und die jeweilige Zusatzvorrichtung (68) in einer gemeinsamen radialen Bewegung der Werkzeugspindel (30) unmittelbar aufeinander folgend aufgenommen bzw. abgegeben werden können.

## Claims

1. A machine tool with at least one tool spindle (30) and with a tool store which receives a plurality of tools (56) in tool holders (50) and is movable in a controlled manner, in order to bring one tool holder (50) capable of being selected into a replacement position in each case, wherein the tools are arranged in the tool holders in such a way that their axis is situated in the plane of movement of the tool store, wherein the tool spindle (30) can remove the tools from the tool holder in the replacement position and can deliver them to the tool holder, in that the tool spindle is moved axially in alignment towards the tool, wherein the tool store has two tool magazines (34, 58), wherein tools are received in tool holders in each of the two tool magazines (34, 58), wherein the tools are arranged in the two tool magazines (34, 58) with the same axial orientation and at a distance in their axial direction with respect to the tools of the other tool magazine in each case, and wherein the two tool magazines are movable in a controlled manner independently of each other in parallel planes of movement in order to move their respective selected tool holders into the replacement position, **characterized in that** the two tool magazines (34, 58) are designed in their plane of movement in the form of magazine wheels (34, 58) extending concentrically, and the tools are arranged in the tool holders with their axis radial with respect to the circulation path.

2. A machine tool according to claim 1, **characterized in that** the tools are received in the tool holders with the shaft directed radially into the interior of the circulation path.

3. A machine tool according to claim 1 or 2, **characterized in that** the tool holders (50) on the outer magazine wheel (34) are arranged on a larger radius than the tool holders (70) on the inner magazine wheel (58).

4. A machine tool according to any one of the preceding claims, **characterized in that** the tool magazine (58) facing the tool spindle (30) during the changing has a free area which can be brought into the replacement position so that the tool spindle (30) can be moved in an unobstructed manner through this free area of the tool magazine (58) towards the other tool magazine (34).

5. A machine tool according to any one of the preceding claims, **characterized in that** the two tool magazines (34, 58) are designed in a modular manner.

6. A machine tool according to claim 3, **characterized in that** the magazine wheels (34, 58) have a segment-shaped portion (46) in which the operating space of the machine tool engages when the magazine wheels (34, 58) are in their rest position.

7. A machine tool according to any one of the preceding claims, which is designed in the form of a grinding machine, **characterized in that** tools (56), in particular grinding tools, and additional devices, in particular grinding-wheel guards (68), are received in the tool store.

8. A machine tool according to claim 7, **characterized in that** tools (56) are received in the outer magazine wheel (34) and additional devices (68) are received in the inner magazine wheel (58).

9. A machine tool according to claim 8, **characterized in that** the outer magazine wheel (34) and the inner magazine wheel (58) with the mutually associated tools (56) and additional devices (68) can be moved into the replacement position, wherein the respective tool (56) and the respective additional device (68) can be received and delivered respectively following directly one after the other in a common radial movement of the tool spindle (30).

## Revendications

1. Machine-outil comportant au moins une broche d'outil (30) et une réserve d'outils recevant plusieurs outils (56) dans des porte-outils (50), cette réserve étant mobile de manière commandée pour conduire chaque fois un porte-outil (50), sélectionné dans une position de changement d'outil,
- les outils étant logés dans les porte-outils de façon que chaque axe se situe dans le plan de déplacement de la réserve d'outils,
- la broche d'outil (30) pouvant prendre les outils en position de changement d'outil à partir du porte-outil et aussi les remettre dans le porte-outil en ce que la broche d'outil est déplacée axialement dans l'alignement de l'outil,
- la réserve d'outils ayant deux magasins d'outils (34, 58),
- chacun des deux magasins d'outils (34, 58), comportant des outils dans des porte-outils,
- les outils des deux magasins d'outils (34, 58) étant installés avec le même alignement d'axe et en regard des outils de l'autre magasin d'outils respectif, suivant la direction de leur axe, et
- les deux magasins d'outils étant mobiles de manière commandée indépendamment l'un de l'autre dans des plans de déplacement parallèles pour conduire leur porte-outil respectivement sélectionné dans la position de changement d'outil,
**caractérisée en ce que**
- les deux magasins d'outils (34, 58) sont réalisés sous la forme de magasins-roues (34, 58), tournants et concentriques dans leur plan de mouvement, et
- les outils sont logés dans les porte-outils avec leur axe dirigé radialement par rapport à la trajectoire de circulation.

2. Machine-outil selon la revendication 1,
**caractérisée en ce que**
- les outils des porte-outils sont logés avec leur queue dirigée vers le côté intérieur de la trajectoire, et
- la broche porte-outil (30) est déplacée du côté intérieur de la trajectoire de circulation, radialement vers les outils.

3. Machine-outil selon la revendication 1 ou 2,
**caractérisée en ce que**
les porte-outils (50) du magasin-roue (34), extérieur, sont installés sur un plus grand rayon que les porte-outils (70) du magasin-roue (58), intérieur.

4. Machine-outil selon l'une des revendications précédentes,
**caractérisée en ce que**
lors du changement d'outil, la broche d'outil (30) présente une zone libre par rapport au magasin d'outils (58) en regard, cette zone libre pouvant être conduite dans la position de changement d'outil pour que la broche d'outil (30), puisse être déplacée dans cette zone libre du magasin d'outils (58) sans être gênée, vers l'autre magasin d'outils (34).

5. Machine-outil selon l'une des revendications précédentes,
**caractérisée en ce que**
les deux magasins d'outils (34, 58) ont une structure modulaire.

6. Machine-outil selon la revendication 3,
**caractérisée en ce que**
les magasins-roues (34, 58) comportent une découpe (46) en forme de segment dans laquelle pénètre l'espace de travail de la machine-outil lorsque les magasins-roues (34, 58) sont en position de repos.

7. Machine-outil selon l'une des revendications précédentes, réalisée sous la forme d'une meuleuse,
**caractérisée en ce que**
la réserve d'outils comporte des outils (56), notamment des outils de meulage et des dispositifs accessoires, notamment des protections de disque de meulage (68).

8. Machine-outil selon la revendication 7,
**caractérisée en ce que**
les outils (56) sont logés dans le magasin-roue (34), extérieur, et des dispositifs accessoires (68) sont logés dans le magasin-roue (58), intérieur.

9. Machine-outil selon la revendication 8,
**caractérisée en ce que**
le magasin-roue, extérieur (34), et le magasin-roue, intérieur (58), alternent avec les outils (56) associés et les dispositifs accessoires (68), l'outil respectif (56) et le dispositif accessoire respectif (68) pouvant être reçus ou déposés suivant un mouvement radial commun de la broche d'outil (30), d'une manière directement successive.
